Europäisches Patentamt

**European Patent Office**

Office européen des brevets

(19)

(11) Publication number: **0 050 949**

**A1**

(12)

# EUROPEAN PATENT APPLICATION

(21) Application number: **81304844.4**

(22) Date of filing: **16.10.81**

(51) Int. Cl.³: **F 16 J 15/56**

(30) Priority: **29.10.80 GB 8034791**

(43) Date of publication of application:
**05.05.82 Bulletin 82/18**

(84) Designated Contracting States:
**DE FR GB IT SE**

(71) Applicant: **JAMES WALKER & COMPANY LIMITED**
**Lion Works**
**Woking Surrey GU22 8AP(GB)**

(72) Inventor: **Shee, Richard Peter Samuel**
**34 Daryngton Drive**
**Merrow Guildford Surrey(GB)**

(74) Representative: **Brown, David Alan et al,**
**MATHYS & SQUIRE 10 Fleet Street**
**London EC4Y 1AY(GB)**

(54) Combined seal, bearing and wiper/scraper ring.

(57) A combined seal, bearing and wiper/scraper ring for sealing the space (14) between a housing (12) and a reciprocating shaft (10) passing through the housing, comprises a single ring (30) having a body including a bearing portion (32) having a cylindrical bearing surface (34) adapted to engage the shaft in a sliding fit, a sealing portion (56) adapted to sealingly engage the shaft (10), and a wiper/scraper portion including an axially and radially inwardly extending lip (40) adapted to engage the shaft (10), the ring further including a surface or lip adapted to sealingly engage the housing (12), and retaining means for retaining the ring in position relative to the housing.

The retaining means is preferably a flange (48), which may also provide the surface (50) which sealingly engages the housing (12). The ring is preferably formed in one piece, but alternative embodiments are described in which the sealing portion and the retaining flange are formed separately.

FIG.2

Combined seal, bearing and
wiper/scraper ring.


This invention relates to a combined seal, bearing
and wiper/scraper ring for a reciprocating shaft.

The invention is concerned particularly, but not
exclusively, with such a ring for sealing the aperture
through which a piston rod emerges from a hydraulic
cylinder. Such apertures have hitherto usually been
sealed by means of a sealing ring, or set of rings,
housed within an annular space in the end wall of the
cylinder surrounding the rod, in the area known generally
as the gland. Since known seals do not function
correctly if the piston rod is not positively guided
in its reciprocating movement or if the sealing ring
itself is used as a bearing, it has been common practice
to include a bearing of metal or plastics within the
gland area, the bearing being a close sliding fit against
the rod. It is also usual to provide a further annular
recess on the outside of the gland to house a wiper/
scraper ring which engages the rod to prevent foreign
matter being carried into the cylinder by the rod. Such
a gland assembly, consisting of seal, bearing and wiper/
scraper ring, requires considerable space and necessitates fine, accurate machining on several parts of the assembly, such as the bearing surface.

It is known to fit the seal, bearing and wiper/ scraper ring in a replaceable end cap which fits into the end of the cylinder. It has also been proposed, in United States Patent specification 3 224 817, to mount the components in a cartridge replaceably housed within the cylinder end cap. However, such assemblies still occupy a relatively large volume and require a high degree of precision in manufacture.

It is an object of this invention to provide a combined seal, bearing and wiper/scraper ring which occupies a relatively small space in use and reduces the quantity of material required and the precision of manufacture, as compared with known assemblies.

According to this invention there is provided a combined seal, bearing and wiper/scraper ring for sealing the space between a housing and a reciprocating shaft passing through the housing, comprising a single ring having a body including a bearing portion having a cylindrical bearing surface adapted to engage the shaft in a sliding fit, a sealing portion having a radially inner surface or lip adapted to sealingly engage the shaft, and a wiper/scraper portion including an axially and radially inwardly extending lip adapted to engage the shaft, the ring further including a surface or lip adapted to sealingly engage the housing, and retaining means for retaining the ring in position relative to the housing.

The three portions of the body may be formed integrally with one another from a single material. Alternatively one or more of the three portions may be made separately from the other portions, from the same or different material, and be mechanically locked or chemically bonded to the other portions to form a composite unit.

Preferably the retaining means comprises an annular flange extending radially outwardly from the body, by means of which the ring can be clamped to the housing, e.g. to the end of a cylinder or a cylinder end cap. The flange may be formed integrally with the body of the ring, or may be separately formed of a different material from that of the body of the ring.

The invention will now be described, by way of example, with reference to the accompanying drawings, in which:

Figure 1 is an axial cross-section through a combined seal, bearing and wiper/scraper ring, in accordance with the invention,

Figure 2 shows the ring of Figure 1 mounted in a hydraulic cylinder,

Figure 3 is an axial cross-section through a ring forming a second embodiment of the invention,

Figure 4 shows a modification of the embodiment of Figure 3, and

Figure 5 is an axial cross-section through a ring forming a further embodiment of the invention.

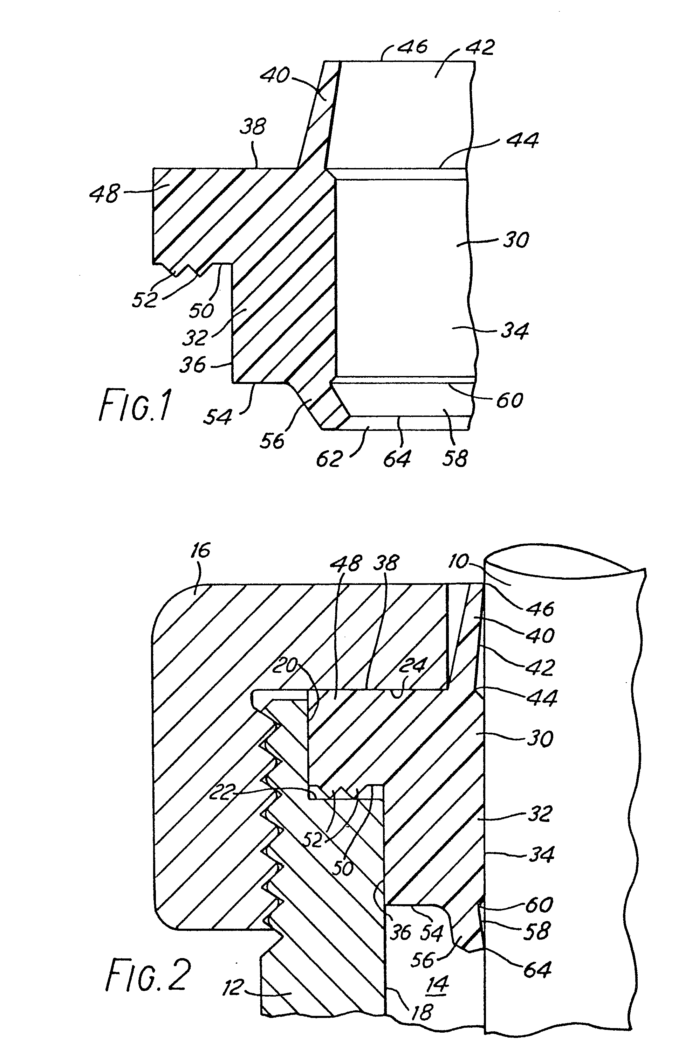

Referring to Figure 2, a piston rod 10 emerges from a hydraulic cylinder through an aperture 14 in an end portion 12 of the cylinder. A combined seal, bearing and wiper/scraper ring 30 in accordance with the invention is mounted in the aperture 14.

The ring 30 comprises an annular body 32 of polyurethane having a radially inner cylindrical face 34 of such diameter as to be a close sliding fit against the piston rod 10, to form a bearing surface for the piston rod. The radially outer face 36 of the body 32 fits against the inner cylindrical face 18 of the end portion of the cylinder. One axial end face 38 of the body 32 abuts the face 24 of a retaining cap 16 screwed onto the end portion 12 of the cylinder.

Extending from end face 38 of the body 32 is an annular lip 40 which acts as a wiper/scraper ring. The lip 40 extends axially and radially inwards from the body 32, the diameter of the radially inner face 42 of the lip at its junction 44 with the body 32 being greater than that of the bearing face 34 of the body. At its outer end 46 the radially inner diameter of the lip 40 is, in its undeformed state, as shown in Figure 1, somewhat less than that of the bearing face 34, so
that the end 46 of the lip 40 is an interference fit
on the piston rod 10.

At the same end of the body 32 as the lip 40 is
a radially outwardly extending flange 48, by means of
which the ring 30 is held in position. As shown in
Figure 2, the flange 48 projects into a stepped recess
20 in the cylinder portion 12 and is clamped between
the face 22 of the recess perpendicular to the axis of
the cylinder 12 and the parallel face 24 of the retaining cap 16. The face 50 of the flange 48 which engages
the face 22 of the recess 20 is formed with a number of
concentric annular projections 52, which enhance the
sealing action between the two faces 50 and 22.

Extending from the end face 54 of the body 32
opposite the wiper/scraper lip 40 is a sealing lip 56.
The sealing lip 56 extends axially and radially inwards
from the body, the diameter of the radially inner face 58
of the lip at its junction 60 with the body being
greater than that of the bearing face 34 of the body.

At its outer end the inner face 58 meets a frusto-
conical end face 62 of the sealing lip 56 in a sealing
edge 64, the diameter of which is less than that of the
bearing face 34 (and of the end 46 of the wiper/scraper
lip 40) so that the sealing lip 56 is an interference
fit on piston rod 10, as shown in Figure 2.

In use, the composite ring 30 is mounted in the end of the cylinder 12 with the sealing lip 56 on the high pressure side, as shown in Figure 2. The body 32 with bearing surface 34 maintains the alignment of the piston rod 10 in its reciprocating movement. The sealing lip 56 is in sealing engagement with the piston rod 10, the force with which the sealing lip engages the rod being increased by the pressure of fluid in the recess between the sealing lip and the surface 18 of the cylinder. Leakage of fluid between the composite ring and the cylinder is prevented by the engagement of the face 36 of the body 32 with surface 18 of the cylinder and, primarily, by the static sealing engagement between the flange 48 of the composite ring and the face 22 of the cylinder, the flange 48 acting as a gasket. The wiper/scraper lip 40 acts to prevent ingress of dirt and foreign matter in the same way as a conventional wiper or scraper ring.

The composite ring 30 must be made of a material which has good wear properties and low friction, to provide an adequate bearing for the piston rod, and at the same time must have sufficient resilience to provide an adequate seal. The described ring is made of polyurethane, but could be made of other materials having these properties. The dimensions of the various portions of the composite ring 20, particularly the wiper/scraper lip 40 and the sealing lip 56 are selected in relation to the properties of the material.

The described composite ring is simple to fit, requiring no specially shaped housing, and takes up very little space as compared with conventional assemblies of seal, bearing and wiper/scraper ring. The use of the composite ring does not call for the relatively large number of accurate production operations required with known assemblies, the only part of the housing requiring accurate machining being the inner cylindrical face 18 of the end portion of the cylinder. The composite ring, as shown in Figure 2, does not require a housing which is closed at the high pressure side. This enables the cylinder designer to utilise the free volume between the ring and the end of the piston stroke to provide a shock-absorbing cushion of hydraulic fluid, without the need to provide additional volume in the cylinder.

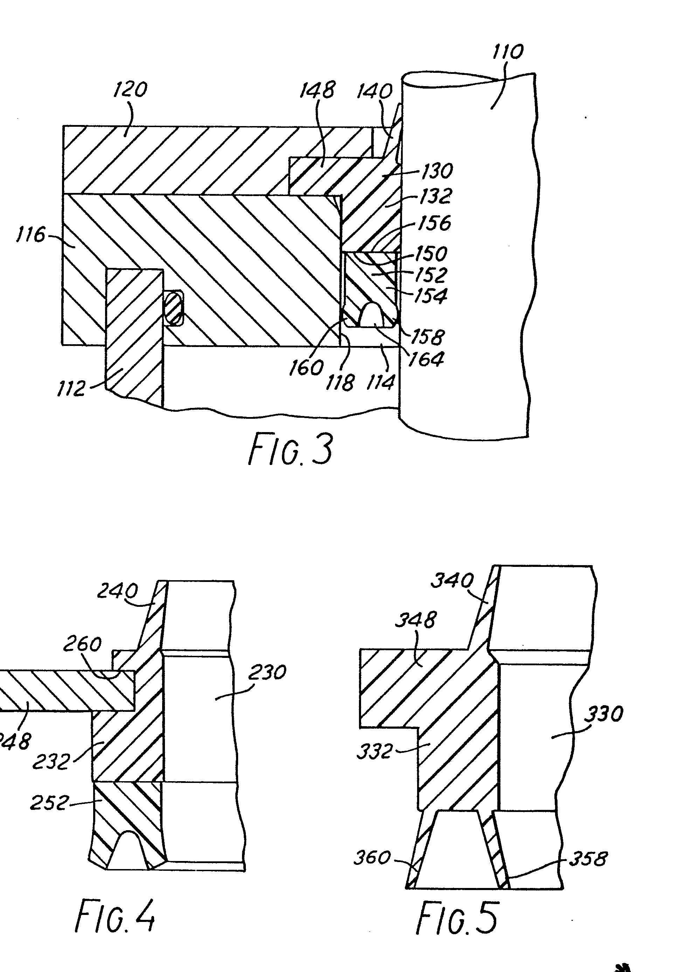

In the embodiment of Figure 3, a composite ring 130 is mounted in the aperture 114 between a piston rod 110 and an end cap 116 of a cylinder 112. The composite ring 130 has a body 132 formed integrally with a wiper/scraper lip 140 and a retaining flange 148, in a similar manner to the embodiment of Figure 1. However, in place of an integral sealing lip, the ring 130 has a separately formed sealing ring portion 152 fixed to the body 132. The sealing ring portion 152 has a body 154 with a flat end face 156 which abuts the end face 28
of the body 132 and is joined to it by means of a
suitable adhesive applied to the abutting end faces.
The inside diameter of the body 154 is slightly greater
than that of the main body 132 of the composite ring,
whilst its outside diameter is slightly less than that
of the main body 132. Extending axially from the body
154 are radially inner and outer sealing lips 158 and
160, which are interference fits on the piston rod 110
and the face 118 of the cylinder end cap 116,
respectively. The lips 158 and 160 are separated by a
recess 164 so that fluid pressure in the cylinder urges
the lips against the piston rod and end cap to enhance
the sealing action, in a similar manner to a conventional
U-section sealing ring.

Since the sealing portion 152 is formed separately,
the main body 132, which performs the bearing function
as in the embodiment of Figure 1, can be made of a harder
material than that of the sealing portion. For example,
the body 132 could be made of polyamide (e.g. nylon) or
an acetal copolymer, whilst the sealing portion 152 could
be of polyurethane. Since the sealing portion 152 forms
a seal against surface 118 of the end cap 116, it is not
essential to have a sealing engagement between the
retaining flange 148 and the end cap 116. The flange 148,
which is trapped between the end cap 116 and a retaining plate 120 bolted to the end cap, therefore does not require annular ridges as in the Figure 1 embodiment.

Figure 4 shows a modification of the embodiment of Figure 3, in which, in place of an integral retaining flange, a metal retaining ring 248 is provided, the ring fitting into an annular recess 260 in the body 230. The ring 248 may be an endless ring, permanently fixed to the body 260. Alternatively, the ring 248 may be provided in two halves, so that the ring can be fitted into the recess 260 when the composite ring is installed in the cylinder. The composite ring has an integral wiper/scraper ring 240 and a sealing portion 252.

The embodiment of Figure 5 is similar to that of Figure 3, except that the two sealing lips 358 and 360 are formed integrally with the body 330. Since in this case the lips 358 and 360 are of the same material as the body 330, which must not be so resilient as to impair the bearing function, the radial thickness of the lips is reduced, as compared with the lips 158 and 160 of Figure 3, to increase their resilience.

The ring has an integral wiper/scraper ring 340 and retaining flange 348. It will be appreciated that a separately formed retaining flange could be used in place of the integral flange.

It will be appreciated that modifications could be made in the described embodiments. For example the sealing portions of the rings could be made in different shapes. Various materials could be used instead of those mentioned. In the embodiments of Figures 3 and 4 the separately formed sealing portion could be mechanically interlocked with the main body of the ring. It will also be appreciated that the composite ring of the invention could be used in other applications where a shaft emerges from a fluid containing region, in addition to the piston and cylinder described.

- 11 -

CLAIMS

1. A combined seal, bearing and wiper/scraper ring for sealing the space between a housing and a reciprocating shaft passing through the housing, comprising a single ring having a body including a bearing portion having a cylindrical bearing surface adapted to engage the shaft in a sliding fit, a sealing portion having a radially inner surface or lip adapted to sealingly engage the shaft, and a wiper/scraper portion including an axially and radially inwardly extending lip adapted to engage the shaft, the ring further including a surface or lip adapted to sealingly engage the housing, and retaining means for retaining the ring in position relative to the housing.

2. A combined seal, bearing and wiper/scraper ring as claimed in claim 1, in which the bearing portion is a ring of generally rectangular cross-section, the lip of the wiper/scraper portion extends axially from one end of the bearing portion and the sealing portion includes a sealing lip extending axially from the other end of the bearing portion.

3. A combined seal, bearing and wiper/scraper ring as claimed in claim 1 or claim 2, in which the retaining means comprises an annular flange extending radially outwards from the body.

4. A combined seal, bearing and wiper/scraper ring as claimed in claim 3 in which the body has a single sealing lip adapted to engage the shaft, and the retaining flange has a surface adapted to sealingly engage the housing.

5. A combined seal, bearing and wiper/scraper ring as claimed in claim 4, in which the said surface of the retaining flange is formed with a number of concentric annular projections arranged to enhance the sealing engagement with the housing.

6. A combined seal, bearing and wiper/scraper ring as claimed in any one of claims 3 to 5, in which the retaining flange is formed integrally with the bearing portion.

7. A combined seal, bearing and wiper/scraper ring as claimed in claim 3, in which the retaining flange is separately formed and fitted into an annular recess in the bearing portion.

8. A combined seal, bearing and wiper/scraper ring as claimed in any one of claims 1 to 3 or claim 7, in which the sealing portion includes a sealing lip arranged to engage the shaft and a further sealing lip arranged to engage a cylindrical surface of the housing.

9.   A combined seal, bearing and wiper/scraper ring as claimed in claim 8, in which the two sealing lips comprise a separately  formed sealing portion fixed to the bearing portion.

10.   A combined seal, bearing and wiper/scraper ring as claimed in any one of claims 1 to 8, in which the bearing portion, sealing portion and wiper/scraper portion  are formed integrally with one another from a single material.

FIG.1

FIG.2

110

120          148    140

116

130
132
156
150
152
154

112          160  118  114    158
                              164

FIG.3

240

260

248          230

232

252

FIG.4

340

348
332          330

360          358

FIG.5

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| X | US - A - 3 366 425 (GENZ) <br> * Column 4, line 57 - column 8, line 26; figures 1-10 * | 1;2,4, 6,8-10 | F 16 J 15/56 |
| X | FR - A - 2 238 389 (CHROMEX) <br> * Page 2, line 1 - page 3, line 28; figures 1-3 * | 1-6 | |
| | FR - A - 2 435 628 (FESTO) <br> * Page 2, line 1 - page 4, line 27; figures 1-2 * | 1 | TECHNICAL FIELDS SEARCHED (Int.Cl.³) <br><br> F 16 J |
| P | US - A - 4 261 583 (DE VRIES) <br> * Column 3, line 23 - column 6, line 30; figures 1-9 * | 1 | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 13-01-1982 | LEGER |

EPO Form 1503.1 06.78